(19) Europäisches Patentamt
European Patent Office
Office européen des brevets

(11) **EP 4 756 498 A1**

(12) **DEMANDE DE BREVET EUROPEEN**

(43) Date de publication:
**10.06.2026 Bulletin 2026/24**

(51) Classification Internationale des Brevets (IPC):
***G01S 19/39*** *(2010.01)* ***G01S 19/42*** *(2010.01)*
***G01S 19/43*** *(2010.01)*

(21) Numéro de dépôt: **25220859.0**

(22) Date de dépôt: **04.12.2025**

(52) Classification Coopérative des Brevets (CPC):
**G01S 19/393; G01S 19/32;** G01S 19/43

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **05.12.2024 FR 2413509**

(71) Demandeur: **THALES**
**92190 Meudon (FR)**

(72) Inventeurs:
• **MARTIN, Nicolas**
**26027 VALENCE CEDEX (FR)**
• **BOUVET, Denis**
**26027 VALENCE CEDEX (FR)**
• **ARNAUDON, Alexandre**
**26027 VALENCE CEDEX (FR)**

(74) Mandataire: **Lavoix**
**2, place d'Estienne d'Orves**
**75441 Paris Cedex 09 (FR)**

(54) **PROCEDE ET TERMINAL DE GEOPOSITIONNEMENT PAR SATELLITES, PROGRAMME D'ORDINATEUR ASSOCIE**

(57) La présente invention concerne un procédé de géopositionnement par N satellites émettant des signaux électromagnétiques formés d'une fréquence porteuse modulée par un code d'étalement, sur deux fréquences Fa, Fb, comportant :
- calcul en régime nominal, de quatre pseudo-distances, une pseudo-distance étant calculée à partir de chaque élément parmi les deux codes et les deux porteuses reçus ;
- filtrage de Kalman dont le vecteur de mesure comprend les quatre pseudo-distances et le vecteur d'état comprend une pseudo-distance lissée, selon lequel des étapes de propagation et de recalage sont effectuées en outre sur un vecteur d'état fictif en fonction d'un vecteur fictif de mesures comportant des valeurs constantes.

FIG.1

EP 4 756 498 A1

**Description**

La présente invention concerne le domaine du positionnement par satellites. L'invention concerne plus particulièrement un procédé de géopositionnement par satellites et un récepteur associé.

Un système de positionnement par satellites (ou GNSS pour « *Global Navigation Satellite System* » selon la terminologie anglosaxonne) utilise une constellation de satellites qui tournent autour de la Terre sur des orbites très précisément déterminées, c'est à dire pour lesquels il est possible de connaître à tout instant la position. Les orbites des satellites sont choisies de sorte qu'à toute heure, six à douze satellites soient visibles en tout point de la Terre. Chaque satellite de type bi-fréquences émet des signaux électro-magnétiques de géopositionnement sur deux fréquences différentes (par exemple, $L_1$=1 575,42 MHz et $L_2$=1 227,6 MHz pour le système GPS et $L_1$=1 575,42 MHz et $E_5$=1 227,6 MHz pour le système GALILEO). Les mesures satellite bi-fréquences permettent de corriger l'erreur ionosphérique à 99% qui constitue la source d'erreur prépondérante.

Un récepteur GNSS, par exemple embarqué dans un engin mobile, reçoit les signaux émis par des satellites visibles et mesure la durée de propagation requise pour qu'une marque horaire transmise par un satellite lui parvienne. Les marques horaires sont codées sur des ondes porteuses par la technique de modulation de phase. Chaque satellite transmet ainsi un code pseudo-aléatoire qui lui est propre. Une réplique de la séquence du code est générée par le récepteur et le décalage que doit subir la réplique afin de coïncider avec le code reçu correspond à la durée de propagation du signal pour parcourir la distance satellite-récepteur. Cette durée multipliée par la vitesse de la lumière dans le milieu traversé donne une mesure de distance appelée pseudo-distance. A partir des mesures des pseudo-distances le séparant de chaque satellite visible, et de la connaissance de la position des satellites, le récepteur déduit sa position précise en latitude, longitude, et en altitude dans un repère terrestre par une étape de résolution numérique de position qui est voisine de la triangulation. Il peut également en déduire la date et l'heure précise dans le repère temporel du système GNSS.

La référence de temps du récepteur, fournie par son horloge, ne coïncide pas parfaitement avec la référence de temps des satellites de la constellation, ce qui induit un biais dans les mesures de temps de propagation, donc de distance, égal au retard de la référence de temps du récepteur par rapport à la référence de temps des satellites. On emploie pour cela le terme de « pseudo-distance ". Le biais de temps d'horloge, commun à toutes les mesures, constitue une quatrième inconnue, outre les trois inconnues de position, ce qui oblige à disposer d'au moins quatre mesures pour calculer la position.

En outre, la position du récepteur de réception est estimée en faisant un certain nombre d'approximations. La mesure de la pseudo-distance ne peut pas par exemple, s'affranchir des erreurs liées au système telles que le manque de précision des éphémérides ou des horloges embarquées dans les satellites. La mesure de la pseudo-distance est également entachée d'erreurs liées aux interactions entre les signaux et les couches d'atmosphère (troposphère et ionosphère) qu'ils traversent. Le retard de propagation du signal dans la troposphère et l'ionosphère dépend de l'inclinaison du trajet et de l'heure à laquelle il a lieu. Typiquement, les erreurs de positionnement du GNSS liées à l'atmosphère sont plus marquées de jour que de nuit et plus sensibles lorsqu'un satellite est proche de l'horizon qu'au zénith. Dans certaines applications, comme l'approche de précision en aéronautique, la précision de positionnement obtenue par une mesure directe ou absolue de la pseudo-distance n'est pas suffisante.

Pour améliorer la précision du positionnement, les récepteurs peuvent aussi tirer profit d'une seconde information élaborée par le récepteur qui est la mesure de la phase de la porteuse, pour chaque signal satellite reçu. La mesure de la phase instantanée de la porteuse reçue permet en effet de calculer une pseudo-distance, dite pseudo-distance de porteuse, entre le récepteur et le satellite, au même titre que la mesure de la phase instantanée du code pseudo-aléatoire. Cette pseudo-distance de porteuse subit les mêmes variations que la pseudo-distance de code, lorsque la distance entre le récepteur et le satellite ou le biais de temps dû à l'horloge du récepteur varient. Cette pseudo-distance mesurée par la phase est a priori ambiguë puisque la phase est connue modulo $2\pi$ mais elle est beaucoup moins bruitée que les mesures de pseudo-distance de code.

Une solution connue pour améliorer les mesures de pseudo-distance consiste à lisser les mesures de pseudo-distance bruitées réalisées sur le code par les mesures de phase peu bruitées axe satellite par axe satellite.

Une technique recommandée par les standards de l'aviation civile pour effectuer un tel lissage est d'utiliser un filtre du premier ordre. Toutefois un tel filtre doit être réinitialisé, avec un temps de convergence pénalisant, à chaque fois qu'un décrochage temporaire de la boucle de porteuse a lieu, par exemple suite à un épisode de scintillation ionosphérique notamment. Etant donné les valeurs typiques de temps de convergence d'environ cent secondes et de durée moyenne entre deux décrochages de dix secondes, on se retrouve avec des mesures satellites toujours indisponibles en présence de fortes scintillations ionosphériques, ce qui est particulièrement problématique dans le cas d'un récepteur aéronautique.

Une autre technique, décrite dans EP 3 223 038 A1, est d'effectuer ce lissage avec un filtre de Kalman recalé sur les mesures de pseudo-distance de code et de pseudo-distance de porteuse des deux fréquences. L'intérêt du filtre de Kalman par rapport au filtre du premier ordre est qu'il permet de mieux gérer la perte d'une des deux fréquences qui a lieu par exemple suite au décrochage temporaire de la boucle de porteuse à cause de la scintillation ionosphérique car il maintient la continuité du lissage et de l'estimation du biais ionosphérique.

L'invention concerne le positionnement satellite calculé à l'aide de pseudo distances lissées par un lissage de Kalman.

Il existe de nombreuses causes au fait que sur certains satellites les deux mesures ne soient pas disponibles en même temps :

- le temps d'accrochage et de démodulation des messages de navigation transmis ne sont pas les mêmes ;
- certains satellites anciens n'émettent pas sur les deux bandes de fréquence ;
- une des deux bandes peut être brouillée.

En cas d'interférence sur une des deux bandes, les satellites ne décrochent pas tous au même moment du fait des puissances émises différentes et du fait du gain d'antenne qui dépend de la direction du satellite.

L'effet de la différence de temps de propagation $\Delta_{TPG}$ entre les deux fréquences n'est pas le même selon que la mesure est bi-fréquence ou mono-fréquence, sur l'une ou l'autre des deux fréquences.

Or lorsque l'on résout la position à partir des mesures de code, si un biais sur les mesures de code commun à toutes les mesures n'a pas d'effet sur la position puisqu'il se retrouve dans l'erreur de temps résolu, ce n'est plus vrai si le biais n'est pas le même sur toutes les mesures.

C'est pourquoi on évite de mélanger les mesures, et on doit choisir entre utiliser seulement des mesures bi-fréquence ou utiliser seulement des mesures mono-fréquence, sur la même fréquence.

L'inconvénient est que cela conduit à se passer de certains axes satellite, au détriment de la géométrie des axes à vue utilisés et donc de la précision et de l'intégrité (rayon de protection RAIM augmenté).

Une solution connue pour mélanger des mesures bi-fréquence et mono-fréquence consiste à ajouter un cinquième état dans la résolution de la position, représentatif de la différence de temps de propagation $\Delta_{TPG}$, en plus des 3 coordonnées de l'espace et du biais de temps de l'horloge récepteur, sachant que dans le cas d'un lissage code porteuse par exemple avec un filtre du premier ordre, le coefficient de la relation linéaire reliant la valeur de $\Delta_{TPG}$ au biais induit sur la mesure de code suivant qu'elle est bi-fréquence ou mono-fréquence, est connu.

Mais dans le cas d'un lissage code porteuse réalisé avec un filtre de Kalman, on a déjà un mélange de mesures bi-fréquence et mono-fréquence du fait des décrochages possibles dans le passé sur une des deux fréquences et la valeur de ce coefficient, susceptible d'évoluer au cours du temps, n'est pas connue.

Le but de l'invention est alors d'améliorer le positionnement déterminé par satellites bi fréquences dans le cas d'un lissage des mesures de pseudodistances effectué par un filtre de Kalman.

A cet effet, l'invention a pour objet un procédé de géopositionnement par satellites mis en œuvre par un terminal de géopositionnement à partir de N satellites, avec N ≥ 4, émettant chacun des signaux électromagnétiques de géopositionnement, dit bi-fréquences, sur deux fréquences différentes Fa, Fb, chacun desdits signaux étant formés d'une fréquence porteuse modulée par un code d'étalement, ledit terminal comprenant au moins un module de réception configuré pour recevoir les signaux électromagnétiques provenant de chaque satellite sur deux fréquences différentes et au moins un module de calcul configuré pour traiter lesdits signaux, ledit procédé étant caractérisé en ce qu'il comprend, pour chaque satellite de géopositionnement, pour chaque instant considéré d'une succession d'instants considérés de détermination de la position du terminal de géopositionnement :

une étape de calcul, en régime nominal, de quatre pseudo-distances, une pseudo-distance étant calculée à partir de chaque élément parmi les deux codes et les deux porteuses des signaux de géopositionnement bi-fréquences reçus ;
une étape de correction des retards ionosphériques sur chaque pseudo-distance calculée en appliquant un modèle de propagation de l'erreur ionosphérique ;
une étape (de lissage code porteuse à l'aide d'un filtre de Kalman dont le vecteur de mesure comprend les quatre pseudo-distances corrigées et dont le vecteur d'état comprend une seule mesure de pseudo-distance lissée, ladite étape de lissage porteuse à l'aide d'un filtre de Kalman ayant pour fonction de corriger le bruit de mesure et le résidu d'erreur ionosphérique et comprenant deux étapes successivement mises en œuvre sur le vecteur d'état, pour fournir dans le vecteur d'état ainsi propagé et recalé une seule mesure de pseudo-distance lissée
une des deux étapes étant une étape de propagation, en fonction d'une matrice de propagation ; et
l'autre des deux étapes étant une étape de recalage, en fonction dudit vecteur de mesures et d'une matrice de gain de recalage,;
la position du terminal de géopositionnement étant estimée en utilisant les pseudo-distances lissées calculées pour chaque satellite ;
ledit procédé de géopositionnement étant caractérisé en ce que :

- ladite matrice de propagation est en outre utilisée pour propager un autre vecteur, dit vecteur d'état fictif, de même taille que le vecteur d'état, ledit vecteur d'état fictif propagé étant en outre recalé en fonction de ladite matrice de gain de recalage et d'un vecteur fictif de mesures de même taille que ledit vecteur de mesure et comportant des composantes de valeurs prédéfinies constantes, communes audits instants de détermination ;

- un coefficient, dit coefficient de proportionnalité, indiquant le rapport entre une différence de propagation entre les deux fréquences dans le terminal et le biais induit par ladite différence sur ladite pseudo-distance lissée est déterminé en fonction de la composante du vecteur d'état fictif de même rang que le rang de la pseudo-distance lissée dans le vecteur d'état ;
- la position du terminal de géopositionnement est estimée en fonction desdites N pseudo-distances lissées pour les N satellites et des N coefficients proportionnalité déterminés pour les N satellites.

Suivant d'autres aspects avantageux de l'invention, le procédé de géopositionnement comprend une ou plusieurs des caractéristiques suivantes, prises isolément ou suivant toutes les combinaisons techniquement possibles :

- si la référence de temps de propagation correspond à la fréquence Fa, le coefficient de proportionnalité est déterminé comme le résultat du rapport entre d'une part la composante du vecteur d'état fictif de même rang que le rang de la pseudo-distance lissée dans le vecteur d'état et d'autre part la composante du vecteur de mesures fictifs de même rang que le rang, dans le vecteur de mesures, de la pseudo-distance de code pour la fréquence Fb ;
- la composante du vecteur de mesures fictifs de même rang que le rang, dans le vecteur de mesures, de la pseudo-distance de code pour la fréquence Fa, est fixée à 0 ;
- les deux composantes du vecteur de mesures fictifs de mêmes rangs que ceux dans le vecteur de mesures, des pseudo-distances de code et de porteuse pour la fréquence Fb sont fixées à 1, les deux autres étant fixées à 0 ;
- si les pseudo-distances d'une des deux fréquences du vecteur de mesures ne sont pas disponibles pendant un intervalle de temps, une réduction correspondante de la dimension du modèle d'observation mis en œuvre par le filtre de Kalman est effectuée pendant ledit intervalle, ladite réduction comprenant une réduction du nombre des composantes de chacun des vecteurs parmi ledit vecteur de mesure et ledit vecteur de mesure fictif ;
- la position du terminal de géopositionnement est estimée par résolution du système $Z_{sat} = H_{pos\ sat} \cdot X_{pos}$ où chaque composante du vecteur $X_{pos}$ est fonction d'une inconnue respective parmi les inconnues de position à déterminer x, y, z, t, $\Delta_{TPG}$ la ième composante du vecteur $Z_{sat}$ i = 1 à N est fonction de la pseudo-distance lissée calculée pour le ième satellite où si ($cos\theta_{xi}$, $cos\theta_{yi}$, $cos\theta_{zi}$) sont les cosinus directeurs dans la direction du i<sup>ème</sup> satellite et $\rho_i$ est le coefficient de proportionnalité calculé pour le ième satellite pour l'instant considéré, la ième ligne de $H_{pos\ sat}$ comporte les composantes $cos\theta_{xi}$, $cos\theta_{yi}$, $cos\theta_{zi}$, une constante et $\rho_i$.

L'invention concerne également un programme d'ordinateur comportant des instructions logicielles qui, lorsqu'elles sont exécutées par un ordinateur, mettent en œuvre un procédé de géopositionnement tel que défini ci-dessus.

L'invention concerne également un terminal de géopositionnement de géopositionnement caractérisé en ce qu'il comprend au moins un module de réception configuré pour recevoir des signaux électromagnétiques de géopositionnement, dit bi-fréquences, émis par au moins quatre satellites sur deux fréquences différentes et au moins un module de calcul configuré pour traiter lesdits signaux de géopositionnement et mettre en œuvre le procédé de géopositionnement selon l'invention.

L'invention apparaîtra plus clairement à la lecture de la description qui va suivre, donnée uniquement à titre d'exemple non limitatif, et faite en référence aux dessins dans lesquels :

- la figure 1 représente un exemple de schéma synoptique d'un procédé de géopositionnement par satellites selon l'invention ;
- La figure 2 représente un exemple d'organigramme de fonctionnement d'un filtre de Kalman mis en œuvre dans un récepteur selon l'invention ;
- La figure 3 représente un exemple d'organigramme de résolution de position mis en œuvre dans un récepteur selon l'invention.

Par la suite on supposera que chaque satellite de géopositionnement émet des signaux électromagnétiques de géopositionnement sur deux fréquences porteuses différentes. On parlera de signaux bi-fréquences et on notera ces deux fréquences, Fa et Fb.

On supposera également qu'il n'y a jamais de décrochage des deux porteuses en même temps, (ou pendant un laps de temps très court), et que le récepteur de géopositionnement reçoit au moins un des deux signaux de géopositionnement.

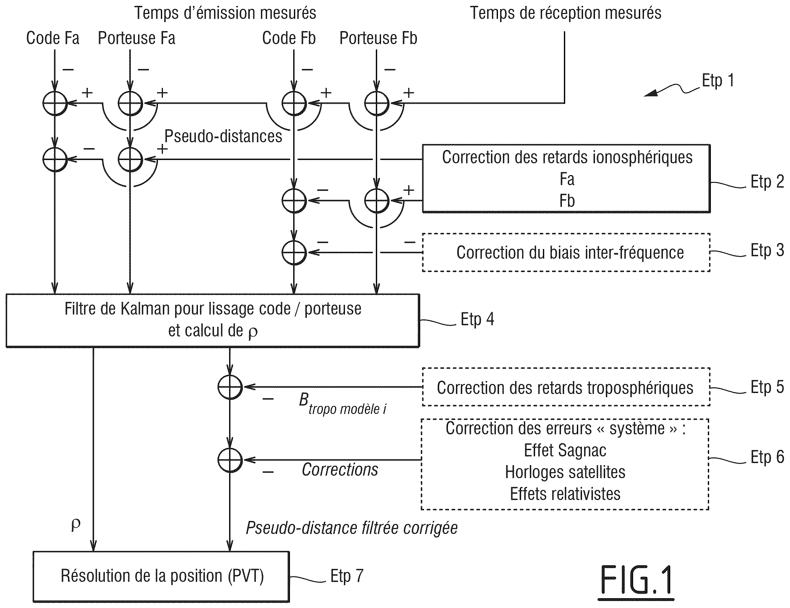

La figure 1 représente un exemple de schéma synoptique, pour chaque axe satellite, d'un procédé de géopositionnement par satellites selon un mode de réalisation de l'invention.

Ce procédé est mis en œuvre par un récepteur de géopositionnement à partir de signaux électromagnétiques de géopositionnement émis par au moins quatre satellites de géopositionnement. Comme énoncé précédemment, chacun de ces signaux est formé d'une fréquence porteuse modulée par un code d'étalement.

Le procédé comprend 7 étapes Etp 1 à Etp 7. Cet ensemble d'étapes est itéré pour chaque nouvel instant $t_n$ considéré. Les étapes Etp 1 à Etp 6 sont réalisées, par exemple en parallèle, en considérant chaque satellite indépendamment.

L'étape Etp 7 utilise les résultats déterminés pour l'instant considéré par les satellites.

Le procédé comprend, pour chaque satellite visible considéré, une première étape Etp1 de mesure de pseudo-distances. Pour cela, le récepteur de géopositionnement comprend au moins un module de réception configuré pour recevoir ces signaux électromagnétiques provenant de chaque satellite sur les deux fréquences Fa et Fb.

De façon connue, ce module de réception peut comprendre au moins une antenne, un circuit analogique effectuant des amplifications, filtrages et changements de fréquence, un convertisseur analogique-numérique et au moins N canaux de traitement numérique. Chaque canal étant affecté à un satellite, l'entier N sera choisi supérieur au nombre de satellites à partir desquels on souhaite recevoir des signaux de géopositionnement.

Chaque canal numérique reçoit un signal numérisé contenant l'ensemble des signaux satellites qu'il soumet à une double boucle d'asservissement permettant d'une part de synchroniser en phase une porteuse localement générée avec la porteuse issue du satellite considéré et d'autre part de synchroniser un code pseudo-aléatoire généré localement avec un code identique présent dans le signal satellite et propre à ce satellite.

Les deux boucles d'asservissement peuvent comprendre chacune deux oscillateurs contrôlé numériquement dont le contenu représente pour le premier oscillateur, la phase instantanée du code pseudo-aléatoire local (aligné sur le code présent dans le signal), qui constitue la mesure de la phase instantanée du code reçu et pour le deuxième oscillateur, la phase instantanée de la porteuse locale (alignée sur la phase de la porteuse présente dans le signal reçu du satellite, au déphasage près introduit par les circuits du récepteur), qui constitue la mesure de la phase instantanée de la porteuse reçue.

La mesure de la phase instantanée du code dans chaque canal est utilisée pour calculer une première donnée numérique appelée pseudo-distance de code $PD_{code}$ représentant une première mesure de la pseudo-distance entre le récepteur et le satellite considéré. Cette mesure est non ambiguë mais assez bruitée.

La mesure de la phase instantanée de la porteuse dans le canal considéré est utilisée pour calculer une deuxième donnée numérique, appelée pseudo-distance de porteuse $PD_{porteuse}$, représentant une deuxième mesure de la pseudo-distance entre le récepteur et le satellite considéré. Cette mesure est peu bruitée mais ambiguë.

Les signaux étant bi-fréquences, en régime nominal, deux pseudo-distances de code et deux pseudo-distances de porteuse sont ainsi calculées pour chaque satellite visible du récepteur. On dispose donc, dans chaque canal numérique, de quatre mesures indépendantes ($PD_{code\ a}$, $PD_{code\ b}$, $PD_{porteuse\ a}$, $PD_{porteuse\ b}$) d'une même pseudo-distance séparant le récepteur de chaque satellite visible de ce dernier. Pour chaque satellite, les deux types de mesures de pseudo-distances ($PD_{code}$ et $PD_{porteuse}$) sont obtenus sous forme de durées de propagation de signal entre le satellite considéré et le récepteur le long de l'axe (axe satellite) joignant le satellite considéré et le récepteur.

A l'instant $t_n$ considéré, les pseudo-distances $PD_{code\ Fa}(n)$, $PD_{code\ Fb}(n)$ et $PD_{porteuse\ Fa}(n)$, $PD_{porteuse\ Fb}(n)$, mesurées respectivement sur le code et la porteuse à la fréquence Fa et la fréquence Fb, sont données par les formules :

$$PD_{code\ a}(n) = (\ T_{réception}(n) - T_{sat\ a}(n)\ )$$

$$PD_{code\ b}(n) = (\ T_{réception}(n) - T_{sat\ b}(n)\ )$$

$$PD_{porteuse\ a}(n) = (\ T_{réception}(n) - \varphi_{porteuse\ a}(n)\ /\ Fa\ )$$

$$PD_{porteuse\ b}(n) = (\ T_{réception}(n) - \varphi_{porteuse\ b}(n)\ /\ Fb\ )$$

dans lesquelles :

- $T_{reception}(n)$ représente la date de réception des signaux considérés à l'instant $t_n$, donnée par l'horloge du récepteur,
- $T_{sat\ a}(n)$ représente la date d'émission, par le satellite, d'un tel signal reçu par le récepteur, donnée par la phase de code locale,
- $\varphi_{porteuse\ a}(n)$ représente la phase de la porteuse locale, ramenée en fréquence de porteuse (cycles),

Pour chaque satellite visible du récepteur de géopositionnement, le procédé de géopositionnement comprend une étape Etp2 de correction des retards ionosphérique sur chaque pseudo-distance calculée en appliquant un modèle de propagation de l'erreur ionosphérique. Pour cela, le récepteur comprend également au moins un module de calcul configuré pour traiter les signaux reçus.

Le modèle de propagation de l'erreur ionosphérique peut être un modèle de Kobuchar, un modèle de Nequick ou tout autre modèle équivalent connu de l'homme du métier.

Le modèle de propagation de l'erreur ionosphérique fournit une estimation de l'erreur ionosphérique sur la mesure de pseudo-distance de code d'une fréquence, par exemple la fréquence Fa, en fonction de la position sur terre et de l'heure dans la journée. Cette erreur ionosphérique représente le retard de groupe induit sur la propagation du signal lors de la traversée de l'ionosphère. Ce retard est proportionnel au contenu électronique total (CET) de la colonne d'atmosphère traversée par le signal et inversement proportionnel au carré de la fréquence de porteuse. Le retard se retrouve sur la mesure de code. L'effet sur la porteuse est une avance de phase de la même valeur absolue.

Si on considère l'erreur ionosphérique sur la fréquence Fa :

sur la mesure de porteuse Fa, on a une avance de phase de - $B_{iono}$ ,
sur la mesure de porteuse Fb, on a une avance de phase de -$\gamma.B_{iono}$,
sur la mesure de code Fa, on a un retard de $B_{iono} = \alpha . CET / Fa^2$ et sur la mesure de code Fb, on a un retard de $\gamma.B_{iono} = \alpha . CET / Fb^2$
avec y = $Fa^2 / Fb^2$.

Donc pour corriger les mesures de code et de phase de porteuse on applique les corrections suivantes :

Sur $PD_{code\ a}$ (n) : - $B_{iono\ modèle}$
Sur $PD_{porteuse\ a}$ (n) : + $B_{iono\ modèle}$
Sur $PD_{code\ b}$ (n) : - Y $B_{iono\ modèle}$
Sur $PD_{porteuse\ b}$ (n) : + $\gamma$ $B_{iono\ modèle}$

Bien entendu, un raisonnement similaire peut être effectué en considérant un modèle fournissant une estimation de l'erreur ionosphérique sur la fréquence Fb.

Afin de traiter les signaux émis par les satellites de géopositionnement aux deux fréquences Fa et Fb, le module de réception comprend deux voies analogiques distinctes. Lorsque ce module de réception reçoit deux signaux de fréquences différentes, les temps de propagation dans chacune des voies analogiques du module peuvent être différents. Ceci a pour effet d'introduire des différences de retard de groupe entre les deux fréquences Fa et Fb, appelés biais RF et notés ci-après $\Delta_{TPG}$.

Lorsque les mesures sont homogènes c'est-à-dire toutes mono-fréquences sur la même fréquence ou toutes bi-fréquences, les biais RF, communs à tous les satellites, n'ont pas d'effet sur la position résolue. Par contre, lorsque l'on mélange des mesures mono-fréquences sur des fréquences différentes ou mono-fréquence et bi-fréquences, on introduit des distorsions entre les mesures satellite donc une erreur sur la position résolue. Ce cas de figure peut se produire par exemple lorsqu'un des deux signaux bi-fréquences n'est pas reçus par le récepteur de géopositionnement par exemple suite à des problèmes de scintillation ionosphérique.

Afin d'éviter cela, dans un mode de réalisation, pour chaque satellite visible, le procédé comprend une étape Etp3 de compensation d'un biais inter-fréquences entre les signaux bi-fréquences. L'étape Etp3 est donc optionnelle.

Au cours de cette étape, le module de calcul identifie l'écart de biais RF entre les deux fréquences sur les mesures de signaux bi-fréquences et corrige cet écart sur tous les satellites en compensant l'écart entre les deux fréquences uniquement sur les mesures de code et seulement sur une des deux fréquences. L'identification du biais RF et sa correction peut être mis en œuvre en utilisant les techniques connues de l'homme du métier notamment celle développé dans la demande de brevet FR 2 943 868. L'écart de biais RF peut être estimé en faisant la moyenne de toutes les mesures de signaux bi-fréquences disponibles depuis le début (moyenne dans le temps et sur les satellites) et en considérant que les biais RF sont constants dans le temps.

Les mesures de code bi-fréquences de chaque satellite sont ensuite lissées par les mesures de porteuse bi-fréquences au cours une étape Etp4 de lissage des pseudo-distances compensées à l'aide d'un filtre de Kalman. Au cours de cette étape, le filtre de Kalman effectue simultanément le lissage code porteuse et la correction du résidu d'erreur ionosphérique.

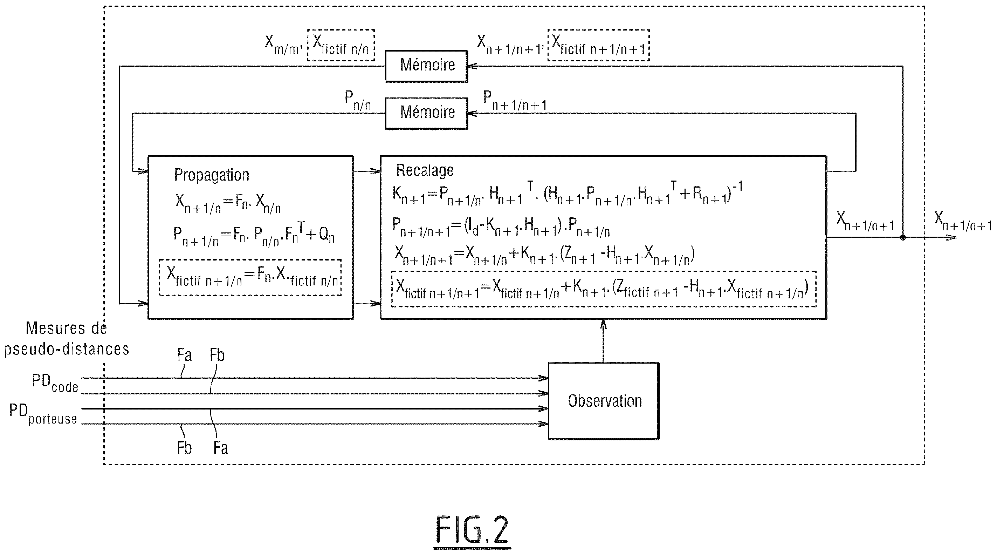

En référence à la figure 2, on rappelle le principe de fonctionnement du filtrage de Kalman.

Le filtrage de Kalman utilise un modèle d'état, établi sur la base de la connaissance (avérée ou supposée) du comportement des grandeurs physiques inconnues que l'on cherche à déterminer et aux mesures disponibles.

Ce modèle d'état est constitué :

- d'un vecteur d'état $X_n$ représentant les grandeurs physiques modélisées à l'instant $t_n$, comportant un nombre de composantes $N_{état}$ .

- d'un modèle de propagation, de la forme : $X_{n+1} = F_n . X_n + V_n$ dans lequel :

  $X_{n+1}$ est le vecteur d'état à l'instant $t_{n+1}$

  $F_n$ est la matrice de propagation sur l'intervalle $[t_n, t_{n+1}]$, de dimension $N_{état}$ x $N_{éta}$ (dans laquelle l'opérateur « x » représente le signe multiplié)

  $V_n$ est le vecteur bruit de propagation sur l'intervalle $[t_n, t_{n+1}]$, blanc, gaussien, de moyenne nulle, de matrice de covariance $Q_n = E[V_n^T . V_n]$ (où $V_n^T$ est le vecteur transposé de $V_n$) et de dimension $N_{état}$,

- d'un modèle d'observation, de la forme : $\mathbf{Z_n = H_n . X_n + W_n}$ dans lequel :

  $Z_n$ est le vecteur d'observation à l'instant $t_n$, de dimension $N_{obs}$

  $H_n$ est la matrice d'observation à l'instant $t_n$, de dimension $N_{obs}$ x $N_{état}$

  $W_n$ est le vecteur bruit de mesure à l'instant $t_n$, blanc, gaussien, de moyenne nulle, de matrice de covariance $R_n = E[W_n^T . W_n]$ (où $W_n^T$ est le vecteur transposé de $W_n$) et de dimension $N_{obs}$.

Dans ce modèle d'état, le vecteur d'état $X_n$ est de valeur a priori inconnue. Il n'est pas directement accessible par la mesure, contrairement au vecteur d'observations $Z_n$, mais seulement par l'intermédiaire du modèle d'observation.

Le filtre de Kalman réalise l'estimation du vecteur d'état par un calcul de propagation, à partir du modèle de propagation, et par un calcul de recalage, à partir des observations et du modèle d'observation.

Pour cela le filtre utilise deux variables :

- le vecteur d'état estimé, noté $X_{n/n}$ après recalage à l'instant $t_n$, noté $X_{n+1/n}$ après propagation entre les instants successifs $t_n$ et $t_{n+1}$, et noté $X_{n+1/n+1}$ après recalage à l'instant $t_{n+1}$, de dimension $N_{état}$ ;
- la matrice de covariance de l'état estimé, notée $P_{n/n}$ après le recalage à l'instant $t_n$, notée $P_{n+1/n}$ après la propagation entre les instants $t_n$ et $t_{n+1}$, et noté $P_{n+1/n+1}$ après recalage à l'instant $t_{n+1}$, de dimension $N_{état}$ x $N_{état}$.

Pour réaliser le calcul de propagation, le filtre utilise les formules :

- pour le vecteur d'état estimé : $\mathbf{X_{n+1/n} = F_n . X_{n/n}}$
  la matrice de propagation $F_n$ servant à établir une relation linéaire entre le vecteur d'état avant propagation et après propagation ;

- pour la matrice de covariance : $\mathbf{P_{n+1/n} = F_n . P_{n/n} . F_n^T + Q_n}$
  (dans laquelle $F_n^T$ représente la matrice transposée de $F_n$).

Dans cette formule, les coefficients de la matrice de covariance $P_n$ représentent la variance de chacune des composantes du vecteur d'état estimé (termes diagonaux) et la covariance des différentes paires de composantes de ce vecteur (termes non diagonaux). Cette matrice $P_n$ représente le degré de confiance qu'on attribue au vecteur d'état estimé.

La matrice de covariance $Q_n$ du bruit de propagation permet de quantifier la part aléatoire et les approximations faites dans le modèle de propagation pour chaque composante du vecteur d'état $X_{n/n}$.

Pour réaliser le calcul de recalage, le filtre utilise les formules suivantes :

- pour le gain de recalage : $\mathbf{K_{n+1} = P_{n+1/n} . H_{n+1}^T . ( H_{n+1} . P_{n+1/n} . H_{n+1}^T + R_{n+1} )^{-1}}$ (où $H_{n+1}^T$ est la matrice transposée de $H_{n+1}$) ;

  la matrice d'observations $H_n$ sert à établir une relation linéaire entre le vecteur d'état et les mesures ;
  la matrice de covariance $R_n$ caractérise le bruit propre des mesures. $R_n$ est une matrice carrée de dimension $N_{obs}$ x $N_{obs}$ ;

- pour le vecteur d'état estimé : $\mathbf{X_{n+1/n+1} = X_{n+1/n} + K_{n+1} . ( Z_{n+1} - H_{n+1} . X_{n+1/n} )}$

- pour la matrice de covariance : $\mathbf{P_{n+1/n+1} = ( Id_{Nétat} - K_{n+1} . H_{n+1} ) . P_{n+1/n}}$ (dans laquelle $Id_{Nétat}$ représente la matrice identité de dimension $N_{état}.N_{état}$).

Au départ (n=0), le vecteur d'état $X_0$ est initialisé à zéro et la matrice $P_0$ est initialisée avec les variances et covariances représentatives de l'incertitude sur les grandeurs physiques modélisées dans le vecteur d'état.

Le calcul de propagation fait intervenir les matrices $F_n$ et $Q_n$ pour déterminer le vecteur d'état estimé propagé

$X_{n+1/n}$ à partir du vecteur d'état estimé recalé $X_{n/n}$ et la matrice de covariance propagée $P_{n+1/n}$ à partir de la matrice de covariance recalée $P_{n/n}$.

Le calcul de recalage fait intervenir les observations $Z_{n+1}$ issues des mesures et les matrices $H_{n+1}$ et $R_{n+1}$, pour déterminer le vecteur d'état estimé recalé $X_{n+1/n+1}$ à partir du vecteur d'état estimé propagé $X_{n+1/n}$ et la matrice de covariance recalée $P_{n+1/n+1}$ à partir de la matrice de covariance propagé $P_{n/n}$.

L'indice n est ensuite incrémenté de 1 (soit n remplacé par n+1) et la propagation, puis le recalage sont réitérés. On enchaîne ainsi une alternance de propagation, recalage et incrémentation de l'indice. On a considéré ici qu'un cycle débutait par une propagation et s'achevait par un recalage, la pseudo distance lissée étant donc celle obtenue après propagation puis recalage. Dans un autre mode de réalisation, on considère qu'un cycle débute par une propagation et s'achève par un recalage.

Sur la figure 2, on a représenté une mémoire recueillant $X_{n+1/n+1}$ et fournissant $X_{n/n}$ pour indiquer que la valeur de vecteur d'état introduite dans le modèle de propagation pour le calcul de $X_{n+1/n}$ daté de l'instant $t_{n+1}$ est la valeur de vecteur d'état $X_{n/n}$ qui a été calculée à l'instant précédent $t_n$. De même, on a représenté une mémoire pour la matrice de covariance $P_{n/n}$ et pour la position estimée $G_{n/n}$.

Dans le filtre de lissage code porteuse selon un mode de mise en oeuvre de l'invention le vecteur d'état X et le modèle d'évolution représenté par les matrices $\mathbf{F_n} = F$ et $\mathbf{F_n} = Q$, sont les suivants :

$$X = \begin{bmatrix} PD \\ B_{iono} \\ \delta_a \\ \delta_b \\ \Delta_{TPG} \end{bmatrix}$$

$$F = \begin{bmatrix} 1 & 0 & 0 & 0 & 0 \\ 0 & \lambda_{iono} & 0 & 0 & 0 \\ 0 & 0 & 1 & 0 & 0 \\ 0 & 0 & 0 & 1 & 0 \\ 0 & 0 & 0 & 0 & 1 \end{bmatrix} \qquad Q = \begin{bmatrix} q_{PD} & 0 & 0 & 0 & 0 \\ 0 & q_{iono} & 0 & 0 & 0 \\ 0 & 0 & q_a & 0 & 0 \\ 0 & 0 & 0 & q_b & 0 \\ 0 & 0 & 0 & 0 & 0 \end{bmatrix}$$

dans lesquels :

- PD représente la pseudo-distance sans bruit de mesure récepteur (bruit thermique, interférence, multi-trajets) et sans erreur ionosphérique ;

  PD = distance satellite récepteur + biais horloge récepteur $\times$ c + erreue troposhérique + biais satellite

- $B_{iono}$ représente l'erreur ionosphérique sur une fréquence (par exemple sur la fréquence Fa) après correction par le modèle (résidu) ;
- $\delta_a$ représente l'ambiguïté flottante de la mesure de phase de porteuse sur la fréquence Fa ;
- $\delta_b$ représente l'ambiguïté flottante de la mesure de phase de porteuse sur la fréquence Fb ;
- $\Delta_{TPG}$ représente le biais inter-fréquences de la voie analogique de la fréquence Fb par rapport à la voie analogique de la fréquence Fa (dans un mode de réalisation où l'étape Etp3 a été réalisée, ce biais $\Delta_{TPC}$ représente le biais RF résiduel après cette correction) ;
- $\lambda_{iono}$ représente le facteur d'atténuation du modèle de Markov de l'erreur ionosphérique ;

$$\lambda_{iono} = 1 - \Delta T/\tau$$

- $\Delta T$ représentant la période de recalage du filtre et $\tau$ la constante de temps du modèle de Markov (du 1[ier] ordre) de l'erreur ionosphérique après correction par le modèle. On prendra $\Delta T$ = 1s et $\tau$ = 2000 s ;
- $q_{PD}$ représente le bruit d'état sur la pseudo-distance vraie. On choisira une valeur très grande pour cette composante car on ne possède pas de modèle d'évolution fiable. On prendra par exemple $q_{PD}$ = (1000 m)[2] ;
- $q_{iono}$ représente le bruit d'état du modèle de Markov (du 1er ordre) de l'erreur ionosphérique après correction par le modèle ;

$$q_{iono} = \sigma_{iono}^2 \cdot 2 \cdot \Delta T/\tau$$

$\sigma_{iono}$ représentant l'écart-type de l'erreur ionosphérique après correction par le modèle ; on prendra par exemple $\sigma_{iono}$ = (20 m)$^2$ ;

- $q_a$ représente le bruit d'état de l'ambiguïté de la mesure de phase de porteuse sur la fréquence Fa ; on prendra par exemple $q_a = (10^{-2} \text{ m})^2$ ;
- $q_b$ représente le bruit d'état de l'ambiguïté de la mesure de phase de porteuse sur la fréquence Fb ; on prendra par exemple $q_b = (10^{-2} \text{ m})^2$.

Les matrices représentatives des mesures et du modèle d'observation s'écrivent ici :

$$Z_n = \begin{bmatrix} PD_{codea}(n) \\ PD_{porteusea}(n) \\ PD_{codeb}(n) \\ PD_{porteuseb}(n) \end{bmatrix} \qquad R = \begin{bmatrix} \sigma^2_{codea} & 0 & 0 & 0 \\ 0 & \sigma^2_{porteusea} & 0 & 0 \\ 0 & 0 & \sigma^2_{codeb} & 0 \\ 0 & 0 & 0 & \sigma^2_{porteuseb} \end{bmatrix}$$

$$H = \begin{bmatrix} 1 & +1 & 0 & 0 & 0 \\ 1 & -1 & 1 & 0 & 0 \\ 1 & +\gamma & 0 & 0 & 1 \\ 1 & -\gamma & 0 & 1 & 1 \end{bmatrix}$$

dans lesquelles :

- $PD_{code\,a}(n)$ représente la pseudo-distance mesurée sur le code de la fréquence Fa , pour l'instant considéré $t_n = n.\Delta T$ ;
- $PD_{porteuse\,a}(n)$ représente la pseudo -distance mesurée sur le code de la fréquence Fa , pour l'instant considéré $t_n = n.\Delta T$ ;
- $PD_{code\,b}(n)$ représente la pseudo-distance mesurée sur le code de la fréquence Fb , pour l'instant considéré $t_n = n.\Delta T$ ;
- $PD_{porteuse\,b}(n)$ représente la pseudo-distance mesurée sur le code de la fréquence Fb , pour l'instant considéré $t_n = n.\Delta T$ ;
- $\sigma_{code\,a}$ et $\sigma_{code\,b}$ représentent respectivement l'écart-type de l'erreur de mesure de la phase de code propre au récepteur pour les fréquences Fa et Fb ;
- $\sigma_{porteuse\,a}$ et $\sigma_{porteuse\,b}$ représentent respectivement l'écart-type de l'erreur de mesure de la phase de porteuse propre au récepteur pour les fréquences Fa et Fb.

Bien sûr, l'ordre des composantes dans les vecteurs observation et le vecteur d'état X a été choisi arbitrairement. Il peut être choisi différent, les composantes des matrices utilisées dans les calculs de recalage et propagation étant simplement déplacées en fonction de l'ordre des composantes dans les vecteurs observation et dans le vecteur d'état X.

Ainsi, pour un satellite considéré, pour chaque instant de traitement $t_n$ considéré, à l'issue de l'étape Etp 4, une pseudo-distance lissée est délivrée, issue du filtrage par le filtre de Kalman des quatre pseudo-distances qui lui ont été fournies en entrée, ainsi qu'une valeur de coefficient $\rho$ déterminée.

Selon l'invention, au cours de chaque instant de traitement, le module de calcul calcule en outre, en parallèle du filtre de Kalman un coefficient $\rho$ égal au coefficient de proportionnalité entre la différence de propagation $\Delta_{TPG}$ et le biais induit par $\Delta_{TPG}$ sur la mesure de code lissée en sortie du filtre.

Notamment ce calcul utilise les gains de recalage du filtre de Kalman utilisé pour déterminer le vecteur d'état X et les applique à un vecteur d'état estimé « fictif », nommé $X_{fictif}$, recalé sur 4 mesures de pseudo-distances fictives, indiquées dans un vecteur d'observation fictif $Z_{fictif}$ qui dans un mode de réalisation prend les valeurs constantes suivantes (ces valeurs restent constantes pour l'ensemble des instants de traitement successifs considérés $t_0, t_1, t_2,..., t_n, t_{n+1} .... $ ) : pour tout n,

$$Z_{fictif\,n} = Z_{fictif} = \begin{bmatrix} 0 \\ 0 \\ 1 \\ 1 \end{bmatrix} \begin{array}{l} composante\ correspondant\ \grave{a}\ PD_{code\ a}\ dans\ Z_n \\ composante\ correspondant\ \grave{a}\ PD_{porteuse\ a}\ dans\ Z_n \\ composante\ correspondant\ \grave{a}\ PD_{code\ b}\ dans\ Z_n \\ composante\ correspondant\ \grave{a}\ PD_{porteuse\ b}\ dans\ Z_n \end{array}$$

Les opérations de recalage et propagation du vecteur d'état fictif sont effectuées par le module de calcul en utilisant le vecteur d'observation fictif et les matrices de propagation, de gain de recalage et d'observation déterminés lors de la détermination du recalage et de la propagation du vecteur X, à l'instant de traitement $t_n$ courant considéré.

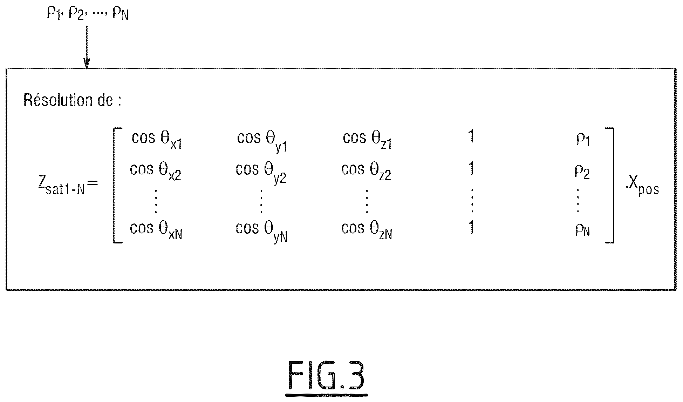

Ainsi, dans l'exemple considéré, en référence à la [Fig 3] figure 3 :

- étape de recalage de $X_{fictif}$ (les indices n/n, n+1/n, n+1/n+1 de $X_{fictif}$ ont les mêmes significations quant à l'état propagé, recalé que celles expliquées plus haut pour le vecteur d'état $X$) :

$$X_{fictif\,n/n} = X_{fictif\,n/n-1} - K_n.\left( Z_{fictif\,n} - H.X_{fictif\,n/n-1} \right)$$

- étape de propagation :

$$X_{fictif\,n+1/n} = F.X_{fictif\,n/n}$$

Le coefficient $\rho$ est donné sur la première composante du vecteur d'état fictif :

$$X_{fictif\,n/n} = \begin{bmatrix} \rho \\ x_2 \\ x_3 \\ x_4 \\ x_5 \end{bmatrix}$$

La valeur de ce coefficient telle que déterminée à l'instant de traitement courant est égale au biais induit sur la pseudo distance lissée en sortie du Kalman pour un biais interfréquence $\Delta_{TPG}$ constant connu valant 1 (soit 1 mètre) ; elle est donc égale au coefficient de proportionnalité entre $\Delta_{TPG}$ et le biais induit par cette différence de temps de propagation sur la mesure lissée en sortie du filtre de Kalman.

**Initialisation**

Lors de l'initialisation (i.e. pour l'instant de traitement $t_0$), le vecteur d'état X, le vecteur d'état fictif $X_{fictif}$ et la matrice de covariance P ont pour valeur :

$$X_{0/0} = \begin{bmatrix} 0 \\ 0 \\ 0 \\ 0 \\ 0 \end{bmatrix} \qquad P_{0/0} = \begin{bmatrix} 1000^2 & 0 & 0 & 0 & 0 \\ 0 & \sigma_{iono}^2 & 0 & 0 & 0 \\ 0 & 0 & 1000^2 & 0 & 0 \\ 0 & 0 & 0 & 1000^2 & 0 \\ 0 & 0 & 0 & 0 & \sigma_{RF}^2 \end{bmatrix}$$

$$X_{fictif\,0/0} = \begin{bmatrix} \rho \\ x_2 \\ x_3 \\ x_4 \\ x_5 \end{bmatrix} = \begin{bmatrix} 0 \\ 0 \\ 0 \\ 0 \\ 0 \end{bmatrix},$$

- $\sigma_{iono}$ représente l'écart-type de l'erreur ionosphérique sur l'axe à vue du satellite considéré. Sa valeur est donnée par des modèles de l'atmosphère, en fonction de l'inclinaison de l'axe satellite, de la latitude du récepteur, et de l'heure du jour. Il est pris ici par exemple $\sigma_{iono} = 30$ m ;

- $\sigma_{RF}$ représente l'écart-type de l'erreur sur le biais interfréquence sur l'axe à vue du satellite considéré ; il est pris ici par exemple $\sigma_{RF}$ = 3 m.

Dans le mode de réalisation décrit, le vecteur d'observation fictif de valeurs $Z_{fictif\ n} = \begin{bmatrix} 0 \\ 0 \\ 1 \\ 1 \end{bmatrix}$ a été choisi, par simplicité. D'autres valeurs constantes pourraient être choisies. Par exemple, une valeur constante, nommée $\lambda$, pourrait être choisie à la place de 1 dans les deux dernières composantes, auquel cas, la première composante du vecteur fictif $X_{fictif}$ serait alors égale au produit $\lambda.\rho$. Dans un mode de réalisation, il est possible de choisir des valeurs quelconques (constantes quel que soit n) sur les composantes correspondant aux mesures de pseudo-distance de porteuse $PD_{porteuse\ a}$ et $PD_{porteuse\ b}$ du vecteur d'observation fictif, $Z_{fictif\ n}$, (grâce aux composantes d'ambiguïté flottante du vecteur d'état, $\delta_a$ et $\delta_b$). Par contre, dans le cas présent, il convient de mettre à zéro la première composante PD code a de Z fictif, $Z_{fictif\ n}$, parce que, via la matrice d'observation H, il a été indiqué dans l'exemple considéré, que $\Delta_{TPG}$ n'était observable que sur les mesures de la fréquence Fb ($PD_{code\ b}$ et $PD_{porteuse\ b}$) : en effet, on s'est intéressé au retard de la fréquence Fb par rapport à la fréquence Fa qui joue ici la référente.

Lorsqu'un satellite décroche sur une fréquence, c'est-à-dire qu'un des deux signaux bi-fréquences émis par un satellite de géopositionnement n'est pas reçu par le récepteur ou est reçu avec une amplitude trop faible, le modèle d'observation est modifié. Les deux lignes correspondant à ces mesures dans les matrices Z, R et H sont supprimées.

Si par exemple, sur un axe satellite, les mesures sur la fréquence Fb deviennent indisponibles et seules les mesures sur la fréquence Fa sont disponibles, les matrices représentatives du modèle d'observation deviennent :

$$Z_n = \begin{bmatrix} PD_{code\ a}(n) \\ PD_{porteuse\ a}(n) \end{bmatrix} \qquad R = \begin{bmatrix} \sigma^2{}_{code\ a} & 0 \\ 0 & \sigma^2{}_{porteuse\ a} \end{bmatrix} \qquad H = \begin{bmatrix} 1 & +1 & 0 & 0 & 0 \\ 1 & -1 & 1 & 0 & 0 \end{bmatrix}$$

$$Z_{fictif\ n} = \begin{bmatrix} 0 \\ 0 \end{bmatrix}$$

De façon analogue, lorsque les mesures sur la fréquence Fa deviennent indisponibles le modèle d'observation s'écrit :

$$Z_n = \begin{bmatrix} PD_{code\ b}(n) \\ PD_{porteuse\ b}(n) \end{bmatrix} \qquad R = \begin{bmatrix} \sigma^2{}_{code\ b} & 0 \\ 0 & \sigma^2{}_{porteuse\ b} \end{bmatrix} \qquad H = \begin{bmatrix} 1 & +\gamma & 0 & 0 & 1 \\ 1 & -\gamma & 1 & 0 & 1 \end{bmatrix}$$

$$Z_{fictif\ n} = \begin{bmatrix} 1 \\ 1 \end{bmatrix}$$

Lorsque les mesures redeviennent disponibles, les deux lignes associées à ces mesures dans les matrices Z, R et H sont rétablies. De plus, pour la fréquence réapparue, l'estimation de l'ambiguïté de la mesure de phase du vecteur d'état X est réinitialisée à 0 avant le recalage sur les 4 mesures. Le coefficient diagonal (variance) associé à l'ambiguïté de phase de porteuse dans la matrice P est réinitialisé à une valeur très grande devant les ordres de grandeur couramment utilisés. Cette valeur est augmentée de façon artificielle pour indiquer au filtre que l'estimation de l'ambiguïté n'est plus bonne, et qu'il faut donc la réinitialiser. Cette variance peut être fixée à une valeur de $1000^2$.

Lorsque les mesures sur la fréquence Fa redeviennent disponibles, le vecteur d'état X et la matrice de covariance P s'écrivent :

$$X_{n+1/n} = \begin{bmatrix} PD_{n+1/n} \\ B_{iono\ n+1/n} \\ 0 \\ \delta_{b\ n+1/n} \\ \Delta_{TPG} \end{bmatrix}$$

$$P_{n+1/n} = P_{n+1/n} + \begin{bmatrix} 0 & 0 & 0 & 0 & 0 \\ 0 & 0 & 0 & 0 & 0 \\ 0 & 0 & 1000^2 & 0 & 0 \\ 0 & 0 & 0 & 0 & 0 \\ 0 & 0 & 0 & 0 & 0 \end{bmatrix}$$

et on force à zéro la 4ème composante du vecteur d'état fictif propagé $X_{fictif\,n+1/n}$.

De façon analogue, lorsque les mesures sur la fréquence Fb redeviennent disponibles, on obtient :

$$X_{n+1/n} = \begin{bmatrix} PD_{n+1/n} \\ B_{iono\,n+1/n} \\ \delta_{a\,n+1/n} \\ 0 \\ \Delta_{TPG} \end{bmatrix}$$

$$P_{n+1/n} = P_{n+1/n} + \begin{bmatrix} 0 & 0 & 0 & 0 & 0 \\ 0 & 0 & 0 & 0 & 0 \\ 0 & 0 & 0 & 0 & 0 \\ 0 & 0 & 0 & 1000^2 & 0 \\ 0 & 0 & 0 & 0 & 0 \end{bmatrix}$$

et on force à zéro la 4ème composante du vecteur d'état fictif propagé $X_{fictif\,n+1/n}$.

Lorsque l'on observe une discontinuité sur la mesure de phase de porteuse de l'une des deux fréquences, le vecteur d'état et la matrice de covariance, sont réinitialisés de la même manière avant le recalage sur la nouvelle mesure de phase de porteuse.

Le Filtre de Kalman permet d'effectuer à la fois le lissage code porteuse et la combinaison « iono-free » : pour l'instant $t_n$ considéré pour le traitement de positionnement : **en entrée** du filtre, quatre pseudo-distances sont fournies à partir desquelles le filtre fournit la donnée utile, qui est la pseudo-distance PD filtrée et corrigée de l'erreur ionosphérique, correspondant à la première coordonnée du vecteur d'état estimé après recalage $X_{n+1/n+1}$.

Du fait que l'on applique les corrections du modèle en amont du filtre de Kalman, celui-ci n'a plus qu'à identifier le résidu de l'erreur ionosphérique. L'erreur calculée grâce au modèle obéit au même modèle de Markov que l'erreur ionosphérique, donc a fortiori la différence aussi, avec une amplitude plus petite. La correction étant elle-même proportionnelle à l'inverse du carré de la fréquence, l'erreur résiduelle l'est aussi, donc le modèle d'observation liant l'état du filtre aux mesures bi-fréquence reste inchangé.

Les modèles de Kobuchar ou de Nequick sont des modèles de prévision de l'erreur ionosphérique qui normalement sont utilisés pour corriger des mesures mono fréquence. Dans le cas de mesures bi-fréquences, le fait de faire la combinaison « iono-free » de signaux sur deux fréquences différentes, permet normalement d'éliminer l'erreur ionosphérique. Dans le procédé selon l'invention, ce modèle est utile lorsque l'une des deux fréquences n'est plus disponible et que la mesure se retrouve mono-fréquence.

Suivant un mode de mise en œuvre alternatif, le vecteur d'état $X_{n/n}$ et le vecteur d'état fictif $X_{fictif\,n/n}$ comprennent chacun quatre états. Dans ce cas, les matrices F et Q du modèle d'évolution sont également de dimension quatre. Le vecteur d'état $X_{n/n}$, le vecteur d'état fictif $X_{fictif\,n/n}$ et le modèle d'évolution deviennent :

$$F = \begin{bmatrix} 1 & 0 & 0 & 0 \\ 0 & \lambda_{iono} & 0 & 0 \\ 0 & 0 & 1 & 0 \\ 0 & 0 & 0 & 1 \end{bmatrix} \qquad Q = \begin{bmatrix} q_{PD} & 0 & 0 & 0 \\ 0 & q_{iono} & 0 & 0 \\ 0 & 0 & q_a & 0 \\ 0 & 0 & 0 & q_b \end{bmatrix}$$

$$X_{n/n} = \begin{bmatrix} PD \\ B_{iono} \\ \delta_a \\ \delta_b \end{bmatrix} \qquad X_{fictif\ n/n} = \begin{bmatrix} \rho \\ x_2 \\ x_3 \\ x_4 \end{bmatrix}$$

En l'absence de saut de cycle de la boucle de phase de porteuse, le bruit d'état sur les ambiguïtés est nul. Pour tenir compte du risque de saut de cycle (modèle non linéaire et non gaussien) on limite la constante de temps du filtre de lissage, qui tend naturellement vers l'infini. En effet, si la constante de temps est trop grande l'effet du saut de cycle sur la pseudo-distance filtrée dure longtemps, le temps que le filtre converge et se recale sur la mesure de code (sans saut). En cas de saut de cycle à répétition, à faible rapport signal à bruit, les sauts vont se cumuler avant que le filtre n'ait le temps de converger sur la mesure de code, ce qui peut introduire une erreur de mesure inacceptable. A titre d'exemple, cinq sauts de cycle donnent 1 mètre d'erreur.

Pour limiter la constante de temps, on utilise une valeur de bruit d'état non nulle.

De façon optionnelle, une étape Etp 5 et/ou Etp6 est ensuite mise en œuvre par le module de calcul du récepteur.

L'étape Etp5 de correction des retards troposphériques peut ensuite être appliquée sur la mesure de pseudo-distance en sortie du filtre de Kalman pour chaque satellite. Cette compensation est obtenue en appliquant un modèle classique dépendant entre autre de l'heure de la journée, de la position géographique du satellite considéré.

L'étape Etp6 de correction des erreurs « système » peut ensuite être appliquée pour chaque axe satellite. Ces erreurs sont liées au principe du GNSS. Il s'agit par exemple de l'Effet Sagnac dû au décalage temporel de la réception de deux signaux tournant en sens inverse. Parmi ces erreurs, on trouve également l'imprécision des horloges atomiques. Lors de cette étape l'effet relativiste est également corrigé. Ces corrections à effectuer sont données par le satellite considéré à travers un message « navigation » contenant les termes correctifs. Ces termes correctifs sont communs aux quatre mesures issues d'un même satellite.

Suivant un mode de mise en œuvre alternatif, les étapes de correction des retards troposphériques Etp5 et des erreurs « système » Etp6 peuvent être réalisées en amont du filtrage de Kalman à condition d'appliquer ces corrections aux quatre mesures de pseudo distance.

Toujours pour l'instant de calcul $t_n$, une fois ces corrections ainsi effectuées le cas échéant sur la mesure de pseudo-distance lissée, le module de calcul estime, dans l'étape Etp 7 et en référence à la [Fig 3] figure 3, la position du récepteur de géopositionnement en combinant les pseudo-distances lissées (voire corrigées) calculées pour chaque satellite visible du récepteur à l'aide de l'algorithme de résolution, PVT pour « *Position, Velocity and Time* » selon la terminologie anglo-saxonne et en prenant aussi en compte la valeur du coefficient $\rho$ déterminée pour chaque satellite à l'étape Etp4.

Considérons qu'il a été calculé ainsi, pour l'instant de traitement $t_n$ et **le** $i^{ème}$ satellite, i = 1 à N, la mesure de pseudo-distance lissée (et corrigée) $PD_{lissée\ i}$, le coefficient $\rho_i$.

Comme énoncé précédemment, au moins quatre pseudo-distances sont nécessaires : donc $N \geq 4$.

Dans le mode de réalisation considéré, on se ramène à un cas différentiel qui permet de linéariser le problème à résoudre, en considérant les différences entre le point de positionnement à déterminer et un point prédéterminé, appelé point de linéarisation P0 de coordonnées connues ($x_0$, $y_0$, $z_0$, $t_0$).

Dans cette étape Etp 7, le module de calcul résout l'équation suivante :

$$Z_{sat} = H_{pos\ sat}.X_{pos}$$

La matrice $H_{pos\ sat}$ reliant $Z_{sat}$ à $X_{pos}$ est $\begin{bmatrix} cos\theta_{x1} & cos\theta_{y1} & cos\theta_{z1} & 1 & \rho_1 \\ cos\theta_{x2} & cos\theta_{y2} & cos\theta_{z2} & 1 & \rho_2 \\ \vdots & \vdots & \vdots & | & \vdots \\ cos\theta_{xN} & cos\theta_{yN} & cos\theta_{zN} & 1 & \rho_N \end{bmatrix}$

**où** ($cos\theta_{xi}$, $cos\theta_{yi}$, $cos\theta_{zi}$) : cosinus directeurs dans la direction du $i^{ème}$ satellite.

Dans le système à résoudre $Z_{sat} = H_{pos\ sat}.X_{pos}$, on considère :

$$X_{pos} = \begin{bmatrix} \Delta x \\ \Delta y \\ \Delta z \\ \Delta t \\ \Delta_{TPG} \end{bmatrix} = \begin{bmatrix} x - x_0 \\ y - y_0 \\ z - z_0 \\ t - t_0 \\ \Delta_{TPG} \end{bmatrix},$$

$$Z_{sat} = \begin{bmatrix} \Delta PD_{liss\acute{e}e\ 1} \\ \Delta PD_{liss\acute{e}e\ 2} \\ \vdots \\ \Delta PD_{liss\acute{e}e\ N} \end{bmatrix}$$

**tel** que $\Delta PD_{liss\acute{e}e\ i}$ = PD $_{liss\acute{e}e\ i}$ - *Distance calculée* $_i$ où

$$Distance\ calcul\acute{e}e_i = \sqrt{(x_0 - x_{sat\ i})^2 + (y_0 - y_{sat\ i})^2 + (z_0 - z_{sat\ i})^2}$$

et $(x_{sat\ i}, y_{sat\ i}, z_{sat\ i})$ : position du satellite i (connue grâce aux éphémérides)

$$H_{pos\ sat}\ \text{est toujours égale à} \begin{bmatrix} cos\theta_{x1} & cos\theta_{y1} & cos\theta_{z1} & 1 & \rho_1 \\ cos\theta_{x2} & cos\theta_{y2} & cos\theta_{z2} & 1 & \rho_2 \\ \vdots & \vdots & \vdots & | & \vdots \\ cos\theta_{xN} & cos\theta_{yN} & cos\theta_{zN} & 1 & \rho_N \end{bmatrix}$$

La solution du problème est donnée par la méthode des moindres carrés :

$$\hat{X}_{pos} = \left(H_{pos\ sat}{}^t . H_{pos\ sat}\right)^{-1} . H_{pos\ sat}{}^t . Z_{sat}$$

La prise en compte des coefficients $\rho_1 \ldots \rho_N$ permet de résoudre la position avec les mesures de pseudo-distance de code lissées de tous les satellites poursuivis, à partir du moment où une mesure de code sur au moins l'une des deux fréquences est disponible.

Dans un mode de réalisation, préalablement à l'étape Etp7, quand le point de linéarisation P0, supposé assez proche de la position réelle pour que les erreurs de linéarisation soient négligeables, n'est pas connu, ce dernier est déterminé, par exemple à partir des quatre pseudo distances, comme connu dans l'état de l'art, par exemple par une méthode de résolution non linéaire par exemple de type Bancroft ou encore par résolution itérative.

L'invention permet ainsi de mélanger des mesures mono fréquences et bi fréquences lissées par un filtre de Kalman tout en prenant en compte les impacts de ce mélange sur la différence de temps de propagation entre les deux fréquences de manière fiable et simple.

En effet, l'effet du $\Delta_{TPG}$ sur la sortie du filtre de lissage code porteuse bi-fréquence ne peut être prédit sans tenir compte de l'historique des mesures, qui ont pu être mélangées. Seul un calcul basé sur les gains du filtre permet d'estimer de manière fiable et simple l'effet du $\Delta_{TPG}$.

Dans un mode de réalisation, le module de calcul peut comprendre au moins un (micro)processeur et au moins une mémoire, dans laquelle un programme d'ordinateur, également appelé produit programme d'ordinateur, comprenant des instructions logicielles sont stockées. Lorsqu'elles sont exécutées sur le microprocesseur du module de calcul, les étapes incombant à ce dernier sont alors mises en œuvre. Le programme d'ordinateur est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

En variante, le module de calcul est réalisé sous forme d'un composant logique programmable, tel qu'un FPGA (de l'anglais *Field Programmable Gate Array),* ou encore d'un circuit intégré, tel qu'un ASIC (de l'anglais *Application Specific Integrated Circuit).*

## Revendications

1. Procédé de géopositionnement par satellites mis en œuvre par un terminal de géopositionnement à partir de N satellites, avec N ≥ 4, émettant chacun des signaux électromagnétiques de géopositionnement, dit bi-fréquences, sur deux fréquences différentes Fa, Fb, chacun desdits signaux étant formés d'une fréquence porteuse modulée par un code d'étalement, ledit terminal comprenant au moins un module de réception configuré pour recevoir les signaux électromagnétiques provenant de chaque satellite sur deux fréquences différentes et au moins un module de calcul configuré pour traiter lesdits signaux, ledit procédé étant **caractérisé en ce qu'**il comprend, pour chaque satellite de géopositionnement, pour chaque instant considéré d'une succession d'instants considérés de détermination de la position du terminal de géopositionnement :

une étape de calcul (Etp1), en régime nominal, de quatre pseudo-distances, une pseudo-distance étant calculée à partir de chaque élément parmi les deux codes et les deux porteuses des signaux de géopositionnement bi-fréquences reçus ;

une étape de correction (Etp2) des retards ionosphériques sur chaque pseudo-distance calculée en appliquant un modèle de propagation de l'erreur ionosphérique ;

une étape (Etp4) de lissage code porteuse à l'aide d'un filtre de Kalman dont le vecteur de mesure comprend les quatre pseudo-distances corrigées et dont le vecteur d'état comprend une seule mesure de pseudo-distance lissée, ladite étape de lissage porteuse à l'aide d'un filtre de Kalman ayant pour fonction de corriger le bruit de mesure et le résidu d'erreur ionosphérique et comprenant deux étapes successivement mises en œuvre sur le vecteur d'état, pour fournir dans le vecteur d'état ainsi propagé et recalé une seule mesure de pseudo-distance lissée

une des deux étapes étant une étape de propagation, en fonction d'une matrice de propagation ; et l'autre des deux étapes étant une étape de recalage, en fonction dudit vecteur de mesures et d'une matrice de gain de recalage,;

la position du terminal de géopositionnement étant estimée en utilisant les pseudo-distances lissées calculées pour chaque satellite ;

ledit procédé de géopositionnement étant **caractérisé en ce que** :

- ladite matrice de propagation est en outre utilisée pour propager un autre vecteur, dit vecteur d'état fictif, de même taille que le vecteur d'état, ledit vecteur d'état fictif propagé étant en outre recalé en fonction de ladite matrice de gain de recalage et d'un vecteur fictif de mesures de même taille que ledit vecteur de mesure et comportant des composantes de valeurs prédéfinies constantes, communes audits instants de détermination ;

- un coefficient, dit coefficient de proportionnalité, indiquant le rapport entre une différence de propagation entre les deux fréquences dans le terminal et le biais induit par ladite différence sur ladite pseudo-distance lissée est déterminé en fonction de la composante du vecteur d'état fictif de même rang que le rang de la pseudo-distance lissée dans le vecteur d'état ;

- la position du terminal de géopositionnement est estimée en fonction desdites N pseudo-distances lissées pour les N satellites et des N coefficients proportionnalité déterminés pour les N satellites.

**2.** Procédé selon la revendication précédente, dans lequel, si la référence de temps de propagation correspond à la fréquence Fa, le coefficient de proportionnalité est déterminé comme le résultat du rapport entre d'une part la composante du vecteur d'état fictif de même rang que le rang de la pseudo-distance lissée dans le vecteur d'état et d'autre part la composante du vecteur de mesures fictifs de même rang que le rang, dans le vecteur de mesures, de la pseudo-distance de code pour la fréquence Fb.

**3.** Procédé selon l'une quelconque des revendications précédentes, dans lequel la composante du vecteur de mesures fictifs de même rang que le rang, dans le vecteur de mesures, de la pseudo-distance de code pour la fréquence Fa, est fixée à 0.

**4.** Procédé selon l'une quelconque des revendications précédentes, dans lequel les deux composantes du vecteur de mesures fictifs de mêmes rangs que ceux dans le vecteur de mesures, des pseudo-distances de code et de porteuse pour la fréquence Fb sont fixées à 1, les deux autres étant fixées à 0.

**5.** Procédé selon l'une quelconque des revendications précédentes, dans lequel si les pseudo-distances d'une des deux fréquences du vecteur de mesures ne sont pas disponibles pendant un intervalle de temps, une réduction correspondante de la dimension du modèle d'observation mis en œuvre par le filtre de Kalman est effectuée pendant ledit intervalle, ladite réduction comprenant une réduction du nombre des composantes de chacun des vecteurs parmi ledit vecteur de mesure et ledit vecteur de mesure fictif.

**6.** Procédé selon l'une quelconque des revendications précédentes, dans lequel la position du terminal de géopositionnement est estimée par résolution du système

$$Z_{sat} = H_{pos\,sat} \cdot X_{pos}$$

où chaque composante du vecteur $X_{pos}$ est fonction d'une inconnue respective parmi les inconnues de position à déterminer x, y, z, t, $\Delta_{TPG}$

la ième composante du vecteur $Z_{sat}$ i = 1 à N est fonction de la pseudo-distance lissée calculée pour le ième satellite

où si ($cos\theta_{xi}$, $cos\theta_{yi}$, $cos\theta_{zi}$) sont les cosinus directeurs dans la direction du i$^{ème}$ satellite et $\rho_i$ est le coefficient de proportionnalité calculé pour le ième satellite pour l'instant considéré, la ième ligne de $H_{pos\ sat}$ comporte les composantes $cos\theta_{xi}$, $cos\theta_{yi}$, $cos\theta_{zi}$, une constante et $\rho_i$.

7. Programme d'ordinateur comportant des instructions logicielles qui, lorsqu'elles sont exécutées par un ordinateur, mettent en œuvre un procédé de géopositionnement selon l'une quelconque des revendications 1 à 6.

8. Terminal de géopositionnement **caractérisé en ce qu'**il comprend au moins un module de réception configuré pour recevoir des signaux électromagnétiques de géopositionnement, dit bi-fréquences, émis par au moins quatre satellites sur deux fréquences différentes et au moins un module de calcul configuré pour traiter lesdits signaux de géopositionnement et mettre en œuvre le procédé de géopositionnement selon l'une des revendications 1 à 6.

Temps de réception mesurés

Etp 1

Temps d'émission mesurés

Porteuse Fb

Code Fb

Porteuse Fa

Code Fa

Pseudo-distances

Correction des retards ionosphériques
Fa
Fb

Etp 2

Correction du biais inter-fréquence

Etp 3

Filtre de Kalman pour lissage code / porteuse et calcul de ρ

Etp 4

Correction des retards troposphériques

Etp 5

Correction des erreurs « système » :
Effet Sagnac
Horloges satellites
Effets relativistes

Etp 6

$B_{tropo\ modèle\ i}$

Corrections

Pseudo-distance filtrée corrigée

ρ

Résolution de la position (PVT)

Etp 7

FIG.1

$X_{m/m},$ $\boxed{X_{\text{fictif } n/n}}$ $X_{n+1/n+1},$ $\boxed{X_{\text{fictif } n+1/n+1}}$

Mémoire

$P_{n/n}$ Mémoire $P_{n+1/n+1}$

**Propagation**

$X_{n+1/n} = F_n \cdot X_{n/n}$

$P_{n+1/n} = F_n \cdot P_{n/n} \cdot F_n^T + Q_n$

$\boxed{X_{\text{fictif } n+1/n} = F_n \cdot X_{\cdot \text{fictif } n/n}}$

**Recalage**

$K_{n+1} = P_{n+1/n} \cdot H_{n+1}^T \cdot (H_{n+1} \cdot P_{n+1/n} \cdot H_{n+1}^T + R_{n+1})^{-1}$

$P_{n+1/n+1} = (I_d - K_{n+1} \cdot H_{n+1}) \cdot P_{n+1/n}$

$X_{n+1/n+1} = X_{n+1/n} + K_{n+1} \cdot (Z_{n+1} - H_{n+1} \cdot X_{n+1/n})$

$\boxed{X_{\text{fictif } n+1/n+1} = X_{\text{fictif } n+1/n} + K_{n+1} \cdot (Z_{\text{fictif } n+1} - H_{n+1} \cdot X_{\text{fictif } n+1/n})}$

$X_{n+1/n+1}$ $X_{n+1/n+1}$

Mesures de
pseudo-distances

Fa  Fb

$PD_{code}$

$PD_{porteuse}$

Fb  Fa

Observation

## FIG.2

$\rho_1, \rho_2, \ldots, \rho_N$

Résolution de :

$$Z_{sat1\text{-}N} = \begin{bmatrix} \cos\theta_{x1} & \cos\theta_{y1} & \cos\theta_{z1} & 1 & \rho_1 \\ \cos\theta_{x2} & \cos\theta_{y2} & \cos\theta_{z2} & 1 & \rho_2 \\ \vdots & \vdots & \vdots & \vdots & \vdots \\ \cos\theta_{xN} & \cos\theta_{yN} & \cos\theta_{zN} & 1 & \rho_N \end{bmatrix} . X_{pos}$$

# FIG.3

Europäisches
Patentamt

European
Patent Office

Office européen
des brevets

**RAPPORT DE RECHERCHE EUROPEENNE**

Numéro de la demande

EP 25 22 0859

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 223 038 A1 (THALES SA [FR]) 27 septembre 2017 (2017-09-27) | 1-4,6-8 | INV. G01S19/39 |
| A | * le document en entier * ----- | 5 | G01S19/42 G01S19/43 |
| A | MARTIN NICOLAS ET AL: "RAIM with Kalman Code Carrier Smoothing", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 septembre 2012 (2012-09-21), pages 2259-2274, XP056008523, * le document en entier * ----- | 1-8 | |
| A | US 6 266 009 B1 (HWANG PATRICK Y [US]) 24 juillet 2001 (2001-07-24) * le document en entier * ----- | 1-8 | |

| DOMAINES TECHNIQUES RECHERCHES (IPC) |
|---|
| G01S |

Le présent rapport a été établi pour toutes les revendications

| Lieu de la recherche | Date d'achèvement de la recherche | Examinateur |
|---|---|---|
| Munich | 2 avril 2026 | Galmiche, Aurélien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..............................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 22 0859

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-04-2026

| Document brevet cité au rapport de recherche | | Date de publication | Membre(s) de la famille de brevet(s) | | Date de publication |
|---|---|---|---|---|---|
| EP 3223038 | A1 | 27-09-2017 | EP | 3223038 A1 | 27-09-2017 |
| | | | FR | 3049354 A1 | 29-09-2017 |
| | | | US | 2017276799 A1 | 28-09-2017 |
| US 6266009 | B1 | 24-07-2001 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3223038 A1
- FR 2943868